# EUROPÄISCHE PATENTSCHRIFT

(11) **EP 3 034 337 B1**
(45) Veröffentlichungstag und Bekanntmachung des Hinweises auf die Patenterteilung: **29.05.2019**
(21) Anmeldenummer: 15195153.0
(22) Anmeldetag: 18.11.2015
(51) Int. Cl.: B60H 1/00, F16L 37/098, B29C 49/00, B29C 51/00, F24F 13/02

(54) **LUFTFÜHRUNGSSYSTEM FÜR EIN KRAFTFAHRZEUG**
AIR CONDUIT SYSTEM FOR A MOTOR VEHICLE
SYSTEME DE CONDUITE D'AIR POUR UN VEHICULE AUTOMOBILE

(30) Priorität: 16.12.2014 DE 202014106078 U
(43) Veröffentlichungstag der Anmeldung: 22.06.2016
(73) Patentinhaber: REHAU AG + Co, 95111 Rehau (DE)
(72) Erfinder: Brendel, Manuel, 08523 Plauen (DE); Walters, Gerhard, 95182 Döhlau (OT Tauperlitz) (DE)

(56) Entgegenhaltungen:
- EP-A2- 1 281 909
- DE-U1-202006 012 636
- JP-A- 2002 321 517

## Beschreibung

Die vorliegende Erfindung betrifft ein Luftführungssystem für ein Kraftfahrzeug, umfassend wenigstens zwei in einem Blasformungsverfahren oder 2-Platten-Thermoformungsverfahren hergestellte Luftführungskanäle, wobei sich die Luftführungskanäle in einem gemeinsamen Verbindungsbereich derart überlappen, dass ein erster Verbindungsabschnitt des ersten Luftführungskanals von einem zweiten Verbindungsabschnitt des zweiten Luftführungskanals umschlossen ist, und wobei die Verbindungsabschnitte einander entsprechende polygonale Querschnitte aufweisen, und wobei die Verbindungsabschnitte über wenigstens eine im Verbindungsbereich vorgesehene Rastverbindung lösbar miteinander verbunden sind, wobei die Rastverbindung aus einem in dem ersten Verbindungsabschnitt ausgeformten Rastelement und einem in dem zweiten Verbindungsabschnitt ausgeformten Gegenrastelement gebildet ist. Das 2-Platten-Thermoformungsverfahren oder Twin-Sheet-Verfahren gehört zu der Gruppe der Thermoformverfahren. Im Gegensatz zum herkömmlichen Thermoformen oder Vakuum-Tiefziehen werden beim 2-Platten-Thermoformungsverfahren nicht eine Platte, sondern zwei Platten gleichzeitig oder direkt nacheinander erwärmt und durch Vakuum-Tiefziehen thermoverformt. Beim Umformen werden die beiden Platten partiell miteinander verschweißt, so dass (ähnlich wie beim Blasformenverfahren) ein Hohlkörper entsteht.

Ein gattungsgemäßes Luftführungssystem ist in den Druckschriften JP 2002321517 A oder EP 1 281 909 A2 offenbart.

Nachteilig an einem Luftführungssystem gemäß dem Stand der Technik liegt in der Dünnwandigkeit der beim Blasformungsverfahren oder im 2-Platten-Thermoformungsverfahren hergestellten Luftführungskanälen, welche dazu führt, dass die in dem Verbindungsabschnitt ausgeformten Rastelemente bzw. Gegenrastelemente im Vergleich zu dem Strömungsquerschnitt der Luftführungskanäle relativ groß ausgebildet werden müssen, um akzeptable Haltekräfte zu erreichen. Hierdurch kommt es zu einer ungewünschten Beeinträchtigung und Verwirbelung des geführten Luftstroms, der Druckverluste innerhalb des Luftführungssystems und störende Geräusche zur Folge haben kann. Zudem gewährleistet die Rastverbindung aufgrund der geringen Eigensteifigkeit der Luftführungskanäle mitunter keine ausreichende Dichtheit des Luftführungssystems im Verbindungsbereich, so dass es hier zu Luftverlusten bzw. Leckagen kommen kann.

Die Aufgabe der Erfindung besteht daher in der Schaffung eines Luftführungssystem für ein Kraftfahrzeug, das gegenüber dem Stand der Technik eine Verminderung des Strömungswiderstands im Bereich des Verbindungsabschnittes bei gleichzeitiger Verbesserung der Dichtheit und des Festsitzes der Verbindung des Luftführungssystems gewährleistet.

Diese Aufgabe wird erfindungsgemäß durch ein Luftführungssystem für ein Kraftfahrzeug erfüllt, umfassend wenigstens zwei in einem Blasformungsverfahren oder 2-Platten-Thermoformungsverfahren hergestellte Luftführungskanäle, wobei sich die Luftführungskanäle in einem gemeinsamen Verbindungsbereich derart überlappen, dass ein erster Verbindungsabschnitt des ersten Luftführungskanals von einem zweiten Verbindungsabschnitt des zweiten Luftführungskanals umschlossen ist und wobei die Verbindungsabschnitte einander entsprechende polygonale Querschnitte aufweisen, und wobei die Verbindungsabschnitte über wenigstens eine im Verbindungsbereich vorgesehene Rastverbindung lösbar miteinander verbunden sind, wobei die Rastverbindung aus einem in dem ersten Verbindungsabschnitt ausgeformten Rastelement und einem in dem zweiten Verbindungsabschnitt ausgeformten Gegenrastelement gebildet ist, wobei das Rastelement und das GegenRastelement auf den jeweiligen, aneinander anliegenden Ecken der Verbindungsabschnitte angeordnet sind. Erfindungsgemäß ist die Rastverbindung zwischen den aneinander anliegenden Ecken der Verbindungsabschnitte gebildet.

Erfindungsgemäß wurde erkannt, dass aufgrund der erhöhten Eigensteifigkeit in den jeweiligen Eckbereichen der Luftführungskanäle bzw. der Verbindungsabschnitte der Luftführungskanäle die Rastverbindung bzw. das Rastelement und das GegenRastelement im Vergleich zu dem Strömungsquerschnitt der Luftführungskanäle deutlich kleiner ausgeführt werden können als dies im Stand der Technik bekannt ist. Die Festigkeit der Verbindung der Luftführungskanäle ist trotz der kleineren Ausführung hierbei vergleichbar oder besser als bei herkömmlichen Luftführungssystemen. Ferner werden bei der Verbindung der Luftführungskanäle beim Zusammenbau des Luftführungssystems nicht die Seitenwände, welche eine geringe Eigensteifigkeit aufweisen, verdrückt, so dass es nicht mehr zu Undichtigkeiten und Leckagen aufgrund der geringen Rückstellkraft der Seitenwände kommen kann. Bevorzugt sind Rastelement und Gegenrastelement daher ausschließlich auf den jeweiligen Ecken der Verbindungsabschnitte angeordnet.

Vorteilhafterweise ist / sind das Rastelement und / oder das Gegenrastelement einstückig mit den entsprechenden Verbindungsabschnitten ausgeformt. Dies bedeutet, dass das Rastelement mit dem ersten Verbindungsabschnitt einstückig ausgeformt und das Gegenrastelement einstückig mit dem zweiten Verbindungsabschnitt ausgeformt ist.

Das Ausformen erfolgt insbesondere bereits bei der Herstellung der Luftführungskanäle im Blasformungsverfahren oder 2-Platten-Thermoformungsverfahren.

Das Rastelement kann insbesondere durch eine lokale Einbuchtung oder eine lokale Ausbuchtung der Außenfläche des ersten Verbindungsabschnitts gebildet sein. Das Gegenrastelement kann insbesondere durch eine lokale Ausbuchtung oder eine lokale Einbuchtung der Innenfläche des zweiten Verbindungsabschnittes gebildet sein. Die Einbuchtung und / oder die Ausbuchtung kann / können hierbei jeweils linienförmig ausgebildet sein. Linienförmig bedeutet in diesem Zusammenhang, dass der Grund der Einbuchtung bzw. der Sattel der Ausbuchtung eine Linie bildet. Die Einbuchtung und / oder die Ausbuchtung ist / sind bevorzugt direkt auf der jeweiligen Ecke der Verbindungsabschnitte gebildet.

Die linienförmige Einbuchtung und / oder die linienförmige Ausbuchtung ist / sind bevorzugt parallel zum Öffnungsrand des entsprechenden Verbindungsabschnittes orientiert.

Bevorzugt weisen die Verbindungsabschnitte einander entsprechende polygonale Querschnitte mit jeweils wenigstens drei Ecken auf, wobei das Rastelement und das Gegenrastelement auf wenigstens zwei der jeweiligen, aneinander anliegenden Ecken der Verbindungsabschnitte angeordnet sind. Besonders bevorzugt sind jedoch auf den jeweiligen, aneinander anliegenden Ecken der Verbindungsabschnitte jeweils eine Rastverbindung aus Rastelement und Gegenrastelement angeordnet.

Zur vereinfachten Verbindbarkeit der Luftführungskanäle kann der Öffnungsrand des außenliegenden zweiten Luftführungskanals und / oder der Öffnungsrand des innenliegenden ersten Luftführungskanals zumindest abschnittsweise eine Einführschräge aufweisen. Ein Längsschnitt der Einführschräge weist hierbei bevorzugt wenigstens zwei sich voneinander unterscheidende Steigungen der Einführschräge auf. Bevorzugt wird die Steigung hierbei in Montagerichtung kleiner, so dass bei der zunehmenden Überdeckung der Verbindungsabschnitte die ansonsten zunehmenden Kräfte / Reibungen durch die verringerte Steigung der Einführschräge kompensiert wird und infolge eine weitgehend konstante Montagekraft erzielbar ist. Die Einführschräge kann in einzelnen Abschnitten oder stufenlos oder einer Kurvenbahn folgend eine in Montagerichtung kleiner werdende Steigung aufweisen.

Die Luftführungskanäle sind bevorzugt aus einem thermoplastischen Kunststoff gebildet. Als besonders geeignet haben sich hierbei Polyolefine, insbesondere Polypropylen und Polyethylen (PE-LD, PE-HD) erwiesen.

Teil der Erfindung ist ferner eine Belüftungs-Heizungs- oder Klimaanlage eines Kraftfahrzeuges mit zumindest einem Gebläse, zumindest einem Luftstromsteuerelement und ggf. zumindest einem Wärmetauscher, wobei die Anlage wenigstens ein vorstehend beschriebenes Luftführungssystem, insbesondere ein Luftführungssystem nach einem der Ansprüche 1 bis 9, aufweist.

Die Erfindung wird anhand der folgenden, lediglich Ausführungsbeispiele darstellender Zeichnungen näher erläutert. Gleiche oder gleichwertige Elemente sind mit den gleichen Bezugszeichen versehen.

Es zeigen:
- Fig. 1: eine dreidimensionale Teilansicht eines Luftführungssystems vor dessen Zusammenbau;
- Fig. 2: eine Längsschnittdarstellung durch den Verbindungsbereich eines erfindungsgemäßen Luftführungssystems;
- Fig. 3: eine Längsschnittdarstellung durch den Verbindungsbereich einer weiteren Variante eines erfindungsgemäßen Luftführungssystems.

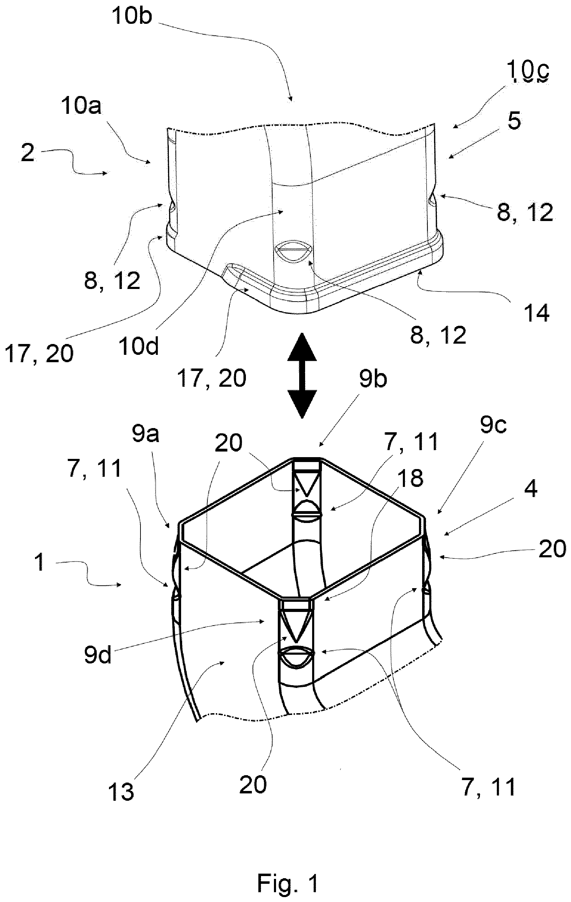

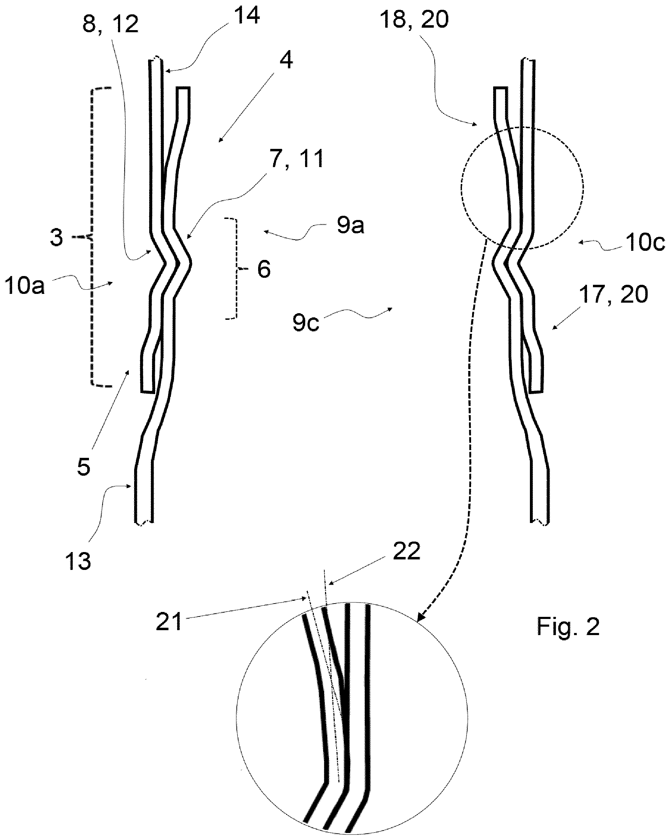

Die Fig. 1 und Fig. 2 zeigen ein Luftführungssystem für ein Kraftfahrzeug, umfassend wenigstens zwei in einem Blasformungsverfahren oder 2-Platten-Thermoformungsverfahren hergestellte Luftführungskanäle 1, 2, wobei sich die Luftführungskanäle 1, 2 in einem gemeinsamen Verbindungsbereich 3 derart überlappen, dass ein erster Verbindungsabschnitt 4 des ersten Luftführungskanals 1 von einem zweiten Verbindungsabschnitt 5 des zweiten Luftführungskanals 2 umschlossen ist (vgl. Fig. 2). Die Fig. 1 zeigt das Luftführungssystem vor dessen Zusammenbau, welcher durch ein Zusammenstecken der beiden Verbindungsabschnitte 4, 5 ineinander erfolgt (durch Doppelpfeil angedeutet). Die Verbindungsabschnitte 4, 5 weisen einander entsprechende polygonale Querschnitte auf. In diesem Ausführungsbeispiel handelt es sich bei dem polygonalen Querschnitt um einen rechteckigen Querschnitt, also ein Polygon mit insgesamt vier Ecken. Die Verbindungsabschnitte 4, 5 sind über die im Verbindungsbereich 3 vorgesehenen Rastverbindungen 6 (vgl. Fig. 2) lösbar miteinander verbunden. Die Rastverbindungen 6 sind hierbei aus einem in dem ersten Verbindungsabschnitt 4 ausgeformten Rastelement 7 und einem in dem zweiten Verbindungsabschnitt 5 ausgeformten Gegenrastelement 8 gebildet. Das Rastelement 7 und das Gegenrastelement 8 sind auf den jeweiligen, aneinander anliegenden Ecken 9a-d, 10a-d der Verbindungsabschnitte 4, 5 angeordnet. Die Rastverbindungen 6 sind in Folge zwischen den aneinander anliegenden Ecken 9a-d, 10a-d der Verbindungsabschnitte 4, 5 gebildet. Das Rastelement 7 und das Gegenrastelement 8 sind hierbei einstückig mit den entsprechenden Verbindungsabschnitten 4, 5 ausgeformt. Das Rastelement 7 ist durch eine lokale Einbuchtung 11 der Außenfläche 13 des ersten Verbindungsabschnitts 4 und das Gegenrastelement 8 durch eine lokale Ausbuchtung 12 der Innenfläche 14 des zweiten Verbindungsabschnitts 5 gebildet (vgl. Fig. 2). Die Einbuchtung 11 und die Ausbuchtung 12 sind linienförmig ausgebildet. Die Einbuchtung 11 und die Ausbuchtung 12 sind direkt auf der jeweiligen Ecke 9a-d, 10a-d der Verbindungsabschnitte 4, 5 gebildet. Die linienförmige Einbuchtung 11 und die linienförmige Ausbuchtung 12 sind hierbei parallel zum Öffnungsrand 17, 18 des entsprechenden Verbindungsabschnitts 4, 5 orientiert. Die Verbindungsabschnitte 4, 5 weisen einander entsprechende polygonale Querschnitte mit jeweils wenigstens drei Ecken auf (in diesem Fall vier Ecken), wobei das Rastelement 7 und das Gegenrastelement 8 auf wenigstens zwei der jeweiligen, aneinander anliegenden Ecken 9a-d, 10a-d der Verbindungsabschnitte 4, 5 angeordnet sind (in diesem Ausführungsbeispiel sind die jeweils vier Ecken mit einer Rastverbindung 6 versehen).

Zur vereinfachten Verbindbarkeit der Luftführungskanäle 1, 2 weist der Öffnungsrand 17 des außenliegenden zweiten Luftführungskanals 2 und der Öffnungsrand des innenliegenden ersten Luftführungskanals 1 zumindest abschnittsweise jeweils eine Einführschräge 20 auf. Der in Fig. 2 dargestellte Längsschnitt durch den Verbindungsbereich 3 zeigt, dass die Einführschräge 20 wenigstens zwei sich voneinander unterscheidende Steigungen 21, 22 (vgl. vergrößerte Darstellung des gestrichelt eingezeichneten Kreises) auf. Die Luftführungskanäle 1,2 sind aus einem thermoplastischen Kunststoff, nämlich einem Polyethylen gebildet.

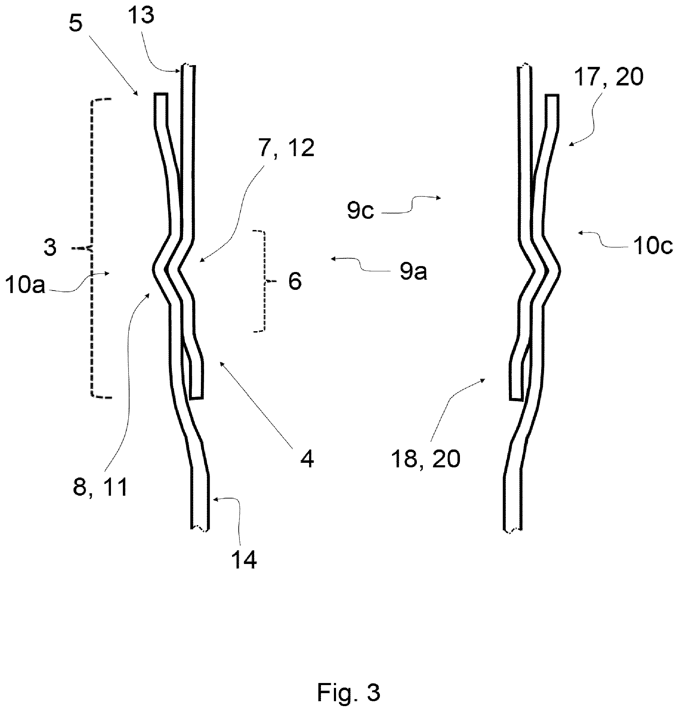

Die Fig. 3 zeigt im Vergleich zu der Fig. 2 ein Luftführungssystem, bei dem das Rastelement 7 durch eine lokale Ausbuchtung 12 der Außenfläche 13 des ersten Verbindungsabschnitts 4 und das Gegenrastelement 8 durch eine lokale Einbuchtung 11 der Innenfläche 14 des zweiten Verbindungsabschnitts 5 gebildet ist. Die Einbuchtung 11 und die Ausbuchtung 12 sind direkt auf der jeweiligen Ecke 9a-d, 10a-d der Verbindungsabschnitte 4, 5 gebildet.

Eine an sich bekannte Belüftungs-Heizungs- oder Klimaanlage eines Kraftfahrzeuges mit zumindest einem Gebläse, zumindest einem Luftstromsteuerelement und ggf. zumindest einem Wärmetauscher kann ein Luftführungssystem wie vorstehend beschrieben aufweisen.

## Patentansprüche

1. Luftführungssystem für ein Kraftfahrzeug, umfassend wenigstens zwei in einem Blasformungsverfahren oder 2-Platten-Thermoformungsverfahren hergestellte Luftführungskanäle (1, 2),
wobei sich die Luftführungskanäle (1, 2) in einem gemeinsamen Verbindungsbereich (3) derart überlappen, dass ein erster Verbindungsabschnitt (4) des ersten Luftführungskanals (1) von einem zweiten Verbindungsabschnitt (5) des zweiten Luftführungskanals (2) umschlossen ist und,
wobei die Verbindungsabschnitte (4, 5) einander entsprechende polygonale Querschnitte aufweisen, und
wobei die Verbindungsabschnitte (4, 5) über wenigstens eine im Verbindungsbereich (3) vorgesehene Rastverbindung (6) lösbar miteinander verbunden sind,
wobei die Rastverbindung (6) aus einem in dem ersten Verbindungsabschnitt (4) ausgeformten Rastelement (7) und einem in dem zweiten Verbindungsabschnitt (5) ausgeformten Gegenrastelement (8) gebildet ist,
**dadurch gekennzeichnet, dass**
das Rastelement (7) und das Gegenrastelement (8) auf den jeweiligen, aneinander anliegenden Ecken (9a, 9b, 9c, 9d, 10a, 10b, 10c, 10d) der Verbindungsabschnitte (4, 5) angeordnet sind.

2. Luftführungssystem nach Anspruch 1, **dadurch gekennzeichnet, dass** das Rastelement (7) und / oder das Gegenrastelement (8) einstückig mit den entsprechenden Verbindungsabschnitten (4, 5) ausgeformt ist / sind.

3. Luftführungssystem nach einem der Ansprüche 1 oder 2, **dadurch gekennzeichnet, dass** das Rastelement (7) durch eine lokale Einbuchtung (11) oder eine lokale Ausbuchtung (12) der Außenfläche (13) des ersten Verbindungsabschnittes (4) und das Gegenrastelement (8) durch eine lokale Ausbuchtung (12) oder eine lokale Einbuchtung (11) der Innenfläche (14) des zweiten Verbindungsabschnittes (5) gebildet ist.

4. Luftführungssystem nach Anspruch 3, **dadurch gekennzeichnet, dass** die Einbuchtung (11) und / oder die Ausbuchtung (12) linienförmig ausgebildet ist / sind.

5. Luftführungssystem nach Anspruch 4, **dadurch gekennzeichnet, dass** die linienförmige Einbuchtung (11) und / oder die linienförmige Ausbuchtung (12) parallel zum Öffnungsrand (17, 18) des entsprechenden Verbindungsabschnittes (4, 5) orientiert ist / sind.

6. Luftführungssystem nach einem der vorstehenden Ansprüche, **dadurch gekennzeichnet, dass** die Verbindungsabschnitte (4, 5) einander entsprechende polygonale Querschnitte mit jeweils wenigstens drei Ecken (9, 10) aufweisen, wobei das Rastelement (7) und das Gegenrastelement (8) auf wenigstens zwei der jeweiligen, aneinander anliegenden Ecken (9a, 9b, 9c, 9d, 10a, 10b, 10c, 10d) der Verbindungsabschnitte (4, 5) angeordnet sind.

7. Luftführungssystem nach einem der vorstehenden Ansprüche, **dadurch gekennzeichnet, dass** zur vereinfachten Verbindbarkeit der Luftführungskanäle (1, 2) der Öffnungsrand (17) des außenliegenden zweiten Luftführungskanals (2) und / oder der Öffnungsrand (18) des innenliegenden ersten Luftführungskanals (1) zumindest abschnittsweise eine Einführschräge (20) aufweist / aufweisen.

8. Luftführungssystem nach Anspruch 7, **dadurch gekennzeichnet, dass** der Längsschnitt der Einführschräge (20) wenigstens zwei sich voneinander unterscheidende Steigungen (21, 22) aufweist.

9. Luftführungssystem nach einem der vorstehenden Ansprüche, **dadurch gekennzeichnet, dass** die Luftführungskanäle (1, 2) aus einem thermoplastischen Kunststoff gebildet sind.

10. Belüftungs- Heizungs- oder Klimaanlage eines Kraftfahrzeuges mit zumindest einem Gebläse, zumindest einem Luftstromsteuerelement und gegebenenfalls zumindest einem Wärmetauscher, **dadurch gekennzeichnet, dass** die Anlage wenigstens ein Luftführungssystem nach einem der vorstehenden Ansprüche aufweist.

## Claims

1. An air conduit system for a motor vehicle, comprising at least two air conduit channels (1, 2) produced in a blow-moulding process or 2-sheet thermoforming process,
wherein the air conduit channels (1, 2) overlap in a common connecting region (3) in such a way that a first connecting section (4) of the first air conduit channel (1) is surrounded by a second connecting section (5) of the second air conduit channel (2) and
wherein the connecting sections (4, 5) have mutually corresponding polygonal cross-sections, and
wherein the connecting sections (4, 5) are releasably connected together by way of at least one latching connection (6) provided in the connecting region (3),
wherein the latching connection (6) is made from a latching element (7) formed in the first connecting section (4) and a mating latching element (8) formed in the second connecting section (5),
**characterised in that**
the latching element (7) and the mating latching element (8) are arranged on the respective mutually adjoining corners (9a, 9b, 9c, 9d, 10a, 10b, 10c, 10d) of the connecting sections (4, 5).

2. The air conduit system according to claim 1, **characterised in that** the latching element (7) and/or the mating latching element (8) is/are formed integrally with the corresponding connecting sections (4, 5).

3. The air conduit system according to one of claims 1 or 2, **characterised in that** the latching element (7) is formed by a local recess (11) or a local protrusion (12) in the external surface (13) of the first connecting section (4) and the mating latching element (8) is formed by a local protrusion (12) or a local recess (11) in the internal surface (14) of the second connecting section (5).

4. The air conduit system according to claim 3, **characterised in that** the recess (11) and/or the protrusion (12) has/have a linear configuration.

5. The air conduit system according to claim 4, **characterised in that** the linear recess (11) and/or the linear protrusion (12) is/are oriented parallel to the opening edge (17, 18) of the corresponding connecting section (4, 5).

6. The air conduit system according to one of the preceding claims, **characterised in that** the connecting sections (4, 5) have mutually corresponding polygonal cross-sections, each with at least three corners (9, 10), wherein the latching element (7) and the mating latching element (8) are arranged on at least two of the respective mutually adjoining corners (9a, 9b, 9c, 9d, 10a, 10b, 10c, 10d) of the connecting sections (4, 5).

7. The air conduit system according to one of the preceding claims, **characterised in that** to facilitate the connectability of the air conduit channels (1, 2) the opening edge (17) of the external second air conduit channel (2) and/or the opening edge (18) of the internal first air conduit channel (1) has/have a lead-in chamfer (20) at least in some sections.

8. The air conduit system according to claim 7, **characterised in that** the longitudinal section of the lead-in chamfer (20) has at least two gradients (21, 22) that differ from each other.

9. The air conduit system according to one of the preceding claims, **characterised in that** the air conduit channels (1, 2) are made from a thermoplastic polymer.

10. A ventilation, heating or air-conditioning unit of a motor vehicle having at least one fan, at least one air flow control element and optionally at least one heat exchanger, **characterised in that** the unit comprises at least one air conduit system according to one of the preceding claims.

## Revendications

1. Système de conduite d'air pour un véhicule automobile, comprenant au moins deux canaux de conduite d'air (1, 2) fabriqués selon un procédé de soufflage ou un procédé de thermoformage double coque,
les canaux de conduite d'air (1, 2) se chevauchant dans une zone de raccordement (3) commune de telle manière qu'une première partie de raccordement (4) du premier canal de conduite d'air (1) est enfermée par une seconde partie de raccordement (5) du second canal de conduite d'air (2) et,
les parties de raccordement (4, 5) présentant des sections transversales polygonales correspondant entre elles, et
les parties de raccordement (4, 5) étant reliées l'une à l'autre de manière détachable par le biais d'au moins un raccordement par encliquetage (6) prévu dans la zone de raccordement (3),
le raccordement par encliquetage (6) étant formé à partir d'un élément d'encliquetage (7) formé dans la première partie de raccordement (4) et d'un élément antagoniste d'encliquetage (8) formé dans la seconde partie de raccordement (5),
**caractérisé en ce que**
l'élément d'encliquetage (7) et l'élément antagoniste d'encliquetage (8) sont disposés sur les coins (9a, 9b, 9c, 9d, 10a, 10b, 10c, 10d) respectifs adjacents les uns aux autres des parties de raccordement (4, 5).

2. Système de conduite d'air selon la revendication 1, **caractérisé en ce que** l'élément d'encliquetage (7) et/ou l'élément antagoniste d'encliquetage (8) est/sont formé(s) d'un seul tenant avec les parties de raccordement (4, 5) correspondantes.

3. Système de conduite d'air selon l'une des revendications 1 ou 2, **caractérisé en ce que** l'élément d'encliquetage (7) est formé par un creux (11) local ou une saillie (12) locale de la surface extérieure (13) de la première partie de raccordement (4) et l'élément antagoniste d'encliquetage (8) est formé par une saillie (2) locale ou un creux (11) local de la surface intérieure (14) de la seconde partie de raccordement (5).

4. Système de conduite d'air selon la revendication 3, **caractérisé en ce que** le creux (11) et/ou la saillie (12) est/sont réalisé(e)(s) en forme de ligne.

5. Système de conduite d'air selon la revendication 4, **caractérisé en ce que** le creux (11) en forme de ligne et/ou la saillie (12) en forme de ligne est/sont orienté(e)(s) parallèlement au bord d'ouverture (17, 18) de la partie de raccordement (4, 5) correspondante.

6. Système de conduite d'air selon l'une des revendications précédentes, **caractérisé en ce que** les parties de raccordement (4, 5) présentent des sections transversales polygonales correspondant entre elles avec au moins trois coins (9, 10), l'élément d'encliquetage (7) et l'élément antagoniste d'encliquetage (8) étant disposés sur au moins deux des coins (9a, 9b, 9c, 9d, 10a, 10b, 10c, 10d) respectifs adjacents les uns aux autres des parties de raccordement (4, 5).

7. Système de conduite d'air selon l'une des revendications précédentes, **caractérisé en ce que**, pour une aptitude au raccordement simplifiée des canaux de conduite d'air (1, 2), le bord d'ouverture (17) du second canal de conduite d'air (2) extérieur et/ou le bord d'ouverture (18) du premier canal de conduite d'air (1) intérieur comporte/comportent au moins sur certaines parties un biseau d'insertion (20).

8. Système de conduite d'air selon la revendication 7, **caractérisé en ce que** la section longitudinale du biseau d'insertion (20) présente au moins deux pentes (21, 22) différentes l'une de l'autre.

9. Système de conduite d'air selon l'une des revendications précédentes, **caractérisé en ce que** les canaux de conduite d'air (1, 2) sont formés à partir d'une matière synthétique thermoplastique.

10. Installation de ventilation, de chauffage ou de climatisation d'un véhicule automobile comprenant au moins un ventilateur, au moins un élément de commande d'écoulement d'air et le cas échéant au moins un échangeur de chaleur, **caractérisée en ce que** l'installation comporte au moins un système de conduite d'air selon l'une des revendications précédentes.
